# EUROPÄISCHE PATENTSCHRIFT

(11) **EP 1 147 830 B1**
(45) Veröffentlichungstag und Bekanntmachung des Hinweises auf die Patenterteilung: **12.03.2008**
(21) Anmeldenummer: 01107660.1
(22) Anmeldetag: 28.03.2001
(51) Int. Cl.: B21B 31/07, B21B 38/00

(54) **Verfahren und Vorrichtung zum Überwachen einer Lageranordnung**
Method and device for monitoring a bearing arrangement
Procédé et dispositif pour contrôler un agencement de palier

(30) Priorität: 19.04.2000 DE 10019325
(43) Veröffentlichungstag der Anmeldung: 24.10.2001
(73) Patentinhaber: SKF GmbH, 97421 Schweinfurt (DE)
(72) Erfinder: Scholl, Jürgen, 97422 Schweinfurt (DE); Sontheimer, Rüdiger, 64688 Rimbach (DE)
(74) Vertreter: Gosdin, Michael

(56) Entgegenhaltungen:
- EP-A- 1 147 829
- DE-A1- 19 944 652
- US-A- 4 884 449
- US-A- 5 585 577
- US-A- 5 805 080
- AHRENS M: "ROCOCO - EIN MODULAR AUFGEBAUTES ÜBERWACHUNGSSYSTEM FÜR WALZANLAGEN" STAHL UND EISEN, VERLAG STAHLEISEN GMBH. DÜSSELDORF, DE, Bd. 118, Nr. 10, 14. Oktober 1998 (1998-10-14), Seiten 53-58,141, XP000791716 ISSN: 0340-4803
- PATENT ABSTRACTS OF JAPAN Bd. 008, Nr. 069 (M-286), 31. März 1984 (1984-03-31) -& JP 58 217817 A (KOYO SEIKO KK), 17. Dezember 1983 (1983-12-17)
- PATENT ABSTRACTS OF JAPAN Bd. 011, Nr. 026 (P-539), 24. Januar 1987 (1987-01-24) -& JP 61 198057 A (KAWASAKI STEEL CORP; others: 02), 2. September 1986 (1986-09-02)
- "ADVERTISEMENT" STEEL TIMES, FUEL & METALLURGICAL JOURNALS LTD. LONDON, GB, Bd. 219, Nr. 4, 1. April 1991 (1991-04-01), Seite 196,198,199 201, XP000205628 ISSN: 0039-095X

## Beschreibung

Die Erfindung betrifft ein Verfahren zum Überwachen einer Lageranordnung mit mindestens einem Lager in einem Einbaustück einer Walzenzapfenlagerung einer Stütz-, Zwischen- oder Arbeitswalze in einem Duo-, Quarto- oder Sextogerüst einer ein- oder mehrgerüstigen Walzstraße. Des weiteren betrifft die Erfindung eine Vorrichtung zum Überwachen einer Lageranordnung.

Eine Walzstraße, vorzugsweise zum Auswalzen metallischen Gutes, besteht meist aus mehreren Walzgerüsten, bei denen das zu walzende Gut zwischen mindestens zwei Walzen hindurchgeführt wird. Die Walzen weisen dabei an ihren beiden Enden je einen Zapfen auf, der in einem sogenannten Einbaustück gelagert ist. Das Einbaustück stellt das die Walze tragende Gehäuse dar, wobei zwischen Walzenzapfen und Einbaustück eine Lageranordnung vorgesehen ist.

Verfahren und Anordnungen zum Überwachen einer Walzstraße sind im Stand der Technik bereits vorbeschrieben. Es wird auf den Beitrag M. Ahrens "RoCoCo - Ein modular aufgebautes Überwachungssystem für Walzanlagen" in Stahl und Eisen, Verlag Stahleisen GmbH, Düsseldorf, Bd. 118, Nr. 10, 14. Oktober 1998, Seiten 53 bis 58**,** auf die JP-A 58-217817**,** auf die JP-A 61-198057 und auf die US-A 4 884 449 hingewiesen.

Die Qualität des Walzprozesses sowie dessen Wirtschaftlichkeit wird wesentlich von der Funktionsfähigkeit der Lageranordnung bestimmt. Es muss daher sichergestellt werden, dass im Laufe der Zeit keine Lagerschäden entstehen; dem kann durch eine vorbeugende Instandhaltung in festgelegten Zeitintervallen begegnet werden.

Dies führt jedoch in nachteilhafter Weise dazu, dass mitunter vorbeugende Instandhaltungsmaßnahmen durchgeführt werden, während das Lager dies noch nicht notwendigerweise benötigt.

Der Erfindung liegt daher die **Aufgabe** zugrunde, ein Verfahren und eine zugehörige Vorrichtung zum Überwachen einer Lageranordnung einer Stütz-, Zwischen- oder Arbeitswalze in einem Walzstraßengerüst zu schaffen, mit dem bzw. mit der es möglich ist, die Instandhaltung bzw. Wartung oder Erneuerung einer Lageranordnung sowie ihres Umfeldes so zu steuern, dass nur bei wirklichem Bedarf tatsächlich eine Instandhaltungsmaßnahme ausgelöst wird.

Die **Lösung** dieser Aufgabe durch die Erfindung ist verfahrensgemäß durch folgende Schritte gekennzeichnet:
a) Messen einer Prozessgröße am Lager oder in einem dem Lager benachbarten Bereich;
b) Zuleiten des gemessenen Wertes der Prozessgröße an eine Auswerteeinrichtung;
c) Vergleich des gemessenen Wertes mit einem gespeicherten vorgegebenen Wert;
d) Auslösen eines Signals, sobald der gemessene Wert den gespeicherten vorgegebenen Wert über- oder untersteigt,
wobei die Prozessgröße der Feuchtigkeitsgehalt im Schmierstoff des Lagers ist.

Die Erfindung stellt also auf den Gedanken ab, dass eine Prozessgröße, nämlich der Feuchtigkeitsgehalt im Schmierstoff, der für die Funktionsfähigkeit bzw. Betriebsfestigkeit der Lageranordnung einer Walzenzapfenlagerung in einem Walzstraßengerüst charakteristisch ist, mittels eines geeigneten Sensors überwacht und permanent mit einem gespeicherten Maximal- bzw. Minimalwert verglichen wird, der als noch gerade möglicher Grenzwert für einen ordnungsgemäßen Betrieb der Lageranordnung in einem Speicher hinterlegt ist. Durch Vergleich des Istwerts mit dem Sollwert kann dann beim Verlassen eines zulässigen Toleranzbereichs ein Signal ausgelöst werden, das dem Betriebspersonal der Walzstraße einen Hinweis darauf liefert, dass Wartungs- bzw. Austauscharbeiten an der betreffenden Walzenzapfenlagerung bzw. ihres Umfeldes notwendig werden.

Vorgesehen ist, dass die Prozessgröße der Feuchtigkeitsgehalt des Schmierstoffs des Lagers ist. Es hat sich herausgestellt, dass Lagerschäden dann bevorzugt auftreten, wenn sich ein unzulässig hoher Feuchtigkeitsgehalt im Lager einstellt. Daher kann mit einem als solchen im Stand der Technik bekannten Feuchtigkeitssensor an geeigneten Stellen des Lagers oder des Umfeldes der Wert der Feuchtigkeit gemessen und überwacht werden.

Weiterhin ist es additiv möglich, die im Lager herrschende Temperatur zu überwachen. Dabei ist bevorzugt an die Temperatur des Außenrings gedacht, da diese in besonders einfacher Weise gemessen werden kann.

Der gemessene Wert wird nach einem weiterbildungsgemäßen Merkmal drahtlos übertragen, wobei bevorzugt sowohl eine Übertragung durch Induktion als auch eine solche durch Funk in Frage kommt.

Die Vorrichtung zum Überwachen einer Lageranordnung mit mindestens einem Lager in einem Einbaustück einer Walzenzapfenlagerung ist erfindungsgemäß gekennzeichnet durch
- einen oder mehrere Sensoren, der bzw. die eine Prozessgröße am Lager oder in einem dem Lager benachbarten Bereich aufnehmen;
- Mittel zum Zuleiten des gemessenen Wertes der Prozessgröße an eine Auswerteeinrichtung;
- Mittel zum Vergleichen des gemessenen Wertes mit einem gespeicherten vorgegebenen Wert;
- Mittel zum Auslösen eines Signals, sobald der gemessene Wert den gespeicherten vorgegebenen Wert über- oder untersteigt,
wobei der Sensor ein Feuchtigkeitssensor ist.

Bei dem Lager handelt es sich bevorzugt um ein Wälzlager; speziell ist an ein mehrreihiges Kegelrollenlager oder an ein mehrreihiges Zylinderrollenlager gedacht.

Weiterbildungsgemäß können die Mittel zum Zuleiten des gemessenen Wertes der Prozessgröße an die Auswerteeinrichtung den Wert drahtlos, vorzugsweise durch Induktion oder Funk, übertragen.

Durch das erfindungsgemäße Konzept wird es möglich, verschiedene Prozessgrößen in einer Walzenzapfenlagerung eines Walzstraßengerüsts zu überwachen und gezielt auf die Notwendigkeit zu schließen, wann Maßnahmen ergriffen werden müssen, um das Lager zu warten bzw. auszutauschen. Auf diese Art und Weise können im richtigen Moment geeignete Aktivitäten eingeleitet werden, um bei beginnenden Lagerschäden einen Austausch der Lageranordnung vorzunehmen. Der gesamte Fertigungsprozess in der Walzstraße kann dadurch optimiert werden. Dasselbe gilt für das Einbaustück (Gehäuse) selber und dessen Umfeld im Walzgerüst. Auch hier kann durch die erläuternden Maßnahmen sichergestellt werden, dass zum richtigen Zeitpunkt ein Austauschteil montiert wird. Durch die Messung und Beobachtung der in Rede stehenden Prozessgrößen kann der Verschleiß im Bereich der Walzenzapfenlagerung sichtbar gemacht werden und automatisch zum richtigen Zeitpunkt signalisiert werden, dass Instandhaltungsmaßnahmen erforderlich sind. Dies bedeutet eine höhere Sicherheit hinsichtlich ungeplanter Stillstände sowie die Möglichkeit, Fehlerquellen direkt zu identifizieren.

In der Zeichnung ist ein Ausführungsbeispiel der Erfindung dargestellt.

Es zeigen:
- Figur 1: schematisch den Querschnitt durch ein Sextogerüst einer Walzstraße,
- Figur 2: schematisch den Schnitt durch eine Walzenzapfenlagerung und die weiteren zur Überwachung dienenden Elemente.

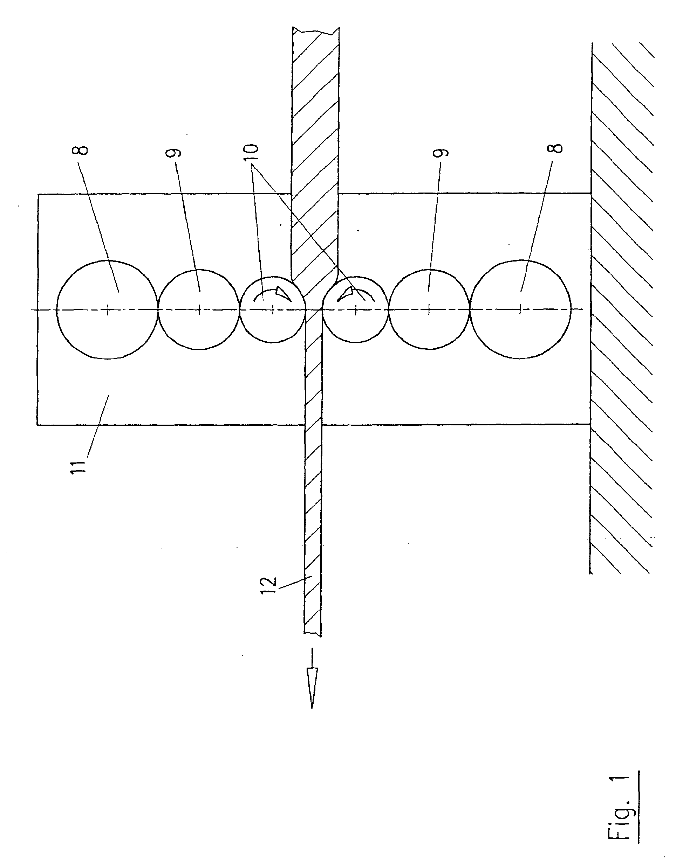

In Figur 1 ist ein Sextogerüst 11 einer Walzstraße zu sehen, in der Walzmaterial 12 gewalzt wird. Das Walzmaterial 12 wird dabei in Pfeilrichtung transportiert. Das Gerüst 11 weist hierzu insgesamt sechs Walzen 8, 9, 10 auf, die aufeinander bzw. auf dem Walzmaterial 12 abrollen. Die Arbeitswalzen 10 stehen dabei mit den Zwischenwalzen 9 in Verbindung; diese wirken wiederum mit den Stützwalzen 8 zusammen.

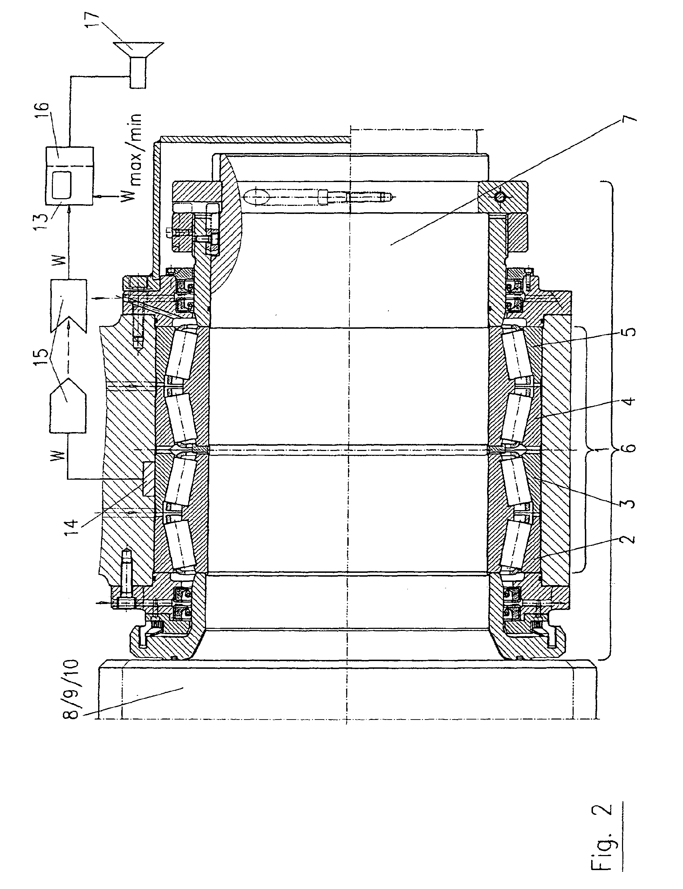

Figur 2 zeigt das Ende einer der Walzen 8, 9, 10 mit ihrem Walzenzapfen 7. Dieser ist in einem Einbaustück (Gehäuse) 6 gelagert. Zur Lagerung dient die Lageranordnung 1, die im vorliegenden Falle aus einem Lager mit vier Lagerreihen 2, 3, 4, 5 besteht.

In die Lageranordnung 1 und/oder in das Einbaustück 6 ist an geeigneter Stelle ein Sensor 14 integriert. Sensoren dieser Art sind im Lagerbereich als solche hinlänglich bekannt. Es sind so z. B. Kraftmesslager bekannt, die mit entsprechenden Kraftsensoren ausgerüstet sind. In ähnlicher Weise können Feuchtigkeits- oder Temperatursensoren in das Lager integriert werden. Gleichermaßen ist es möglich, durch entsprechende Anordnung und Zusammenschaltung von Dehnungsmeßstreifen die Verformungen der Lageranordnung aufzunehmen. Schließlich können auch Beschleunigungs- oder Wegsensoren in das Lager integriert werden, um namentlich Schwingungen aufzuzeichnen.

Der Sensor 14 leitet die aufgenommene Prozeßgröße W an die Auswerteeinrichtung 13. Hierzu kommen Mittel 15 zum Zuleiten des gemessenen Wertes zum Einsatz. Durch den gestrichelten Pfeil in Figur 2 ist angedeutet, daß die Übertragung des Wertes der Prozeßgröße W auch drahtlos erfolgen kann, beispielsweise durch Funk oder Induktion.

Die Auswerteeinrichtung 13 erhält neben dem gemessenen Wert W der Prozeßgröße auch einen gespeicherten vorgegebenen Wert W_{max/min}. In den Mitteln 16 zum Vergleichen des gemessenen Wertes W mit dem vorgegebenen Wert W_{max/min} wird festgestellt, ob der gemessene Wert (Ist-Wert) noch im zulässigen Toleranzbereich (Soll-Wert) liegt, d. h. noch kleiner als ein zulässiger Maximalwert bzw. noch größer als ein zulässiger Minimalwert ist. Vorliegend kommt freilich überwiegend ein Vergleich des gemessenen Wertes mit einem vorgegebenen Maximalwert für Kraft, Feuchtigkeit, Temperatur oder Verformung in Frage.

Wenn der vorgegebene Toleranzbereich bzw. der vorgegebene Maximalwert für die gemessene Prozeßgröße überschritten wird, veranlassen Mittel 17 die Auslösung eines Signals. Dies kann in mannigfaltiger Weise erfolgen, beispielsweise durch Anzeigelampen oder durch akustische Signale. Entscheidend ist, daß das Bedienpersonal der Walzstraße darüber informiert wird, daß zulässige Betriebsparameter im Lagerbereich überschritten wurden. Es kann dann veranlaßt werden, daß am Lager Instandhaltungsarbeiten vorgenommen werden, so daß es zu keinem Lagerausfall kommt.

Im Ausführungsbeispiel ist eine Lösung gezeigt, bei der - wie häufig - die Walze an ihrem Ende einen Zapfen aufweist, der durch die Lageranordnung gelagert wird. Genauso ist es allerdings denkbar, daß die Walze in ihren beiden Endbereichen je eine Innenbohrung aufweist, in die je ein Zapfen hineinragt, der am Gehäuse angebracht ist. In diesem Falle ist das Lager zwischen diesem Zapfen und der zylindrischen Innenfläche der Bohrung angeordnet.

### Bezugszeichen

- 1: Lageranordnung
- 2, 3, 4, 5: Lagerreihen der Lageranordnung
- 6: Einbaustück
- 7: Walzenzapfen
- 8: Stützwalze
- 9: Zwischenwalze
- 10: Arbeitswalze
- 11: Gerüst in einer Walzstraße
- 12: Walzmaterial
- 13: Auswerteeinrichtung
- 14: Sensor
- 15: Mittel zum Zuleiten des gemessenen Wertes an die Auswerteeinrichtung
- 16: Mittel zum Vergleich des gemessenen Wertes mit dem vorgegebenen Wert
- 17: Mittel zum Auslösen eines Signals

- W: Prozeßgröße (Wert)
- W_{max/min}: gespeicherter vorgegebener Wert für die Prozeßgröße

## Patentansprüche

1. Verfahren zum Überwachen einer Lageranordnung (1) mit mindestens einem Lager (2, 3, 4, 5) in einem Einbaustück (6) einer Walzenzapfenlagerung einer Stütz- (8), Zwischen- (9) oder Arbeitswalze (10) in einem Duo-, Quarto- oder Sextogerüst (11) einer ein- oder mehrgerüstigen Walzstraße, wobei
das Verfahren die Schritte aufweist:
a) Messen einer Prozessgröße (W) am Lager (2, 3, 4, 5) oder in einem dem Lager (2, 3, 4, 5) benachbarten Bereich;
b) Zuleiten des gemessenen Wertes der Prozessgröße (W) an eine Auswerteeinrichtung (13);
c) Vergleich des gemessenen Wertes mit einem gespeicherten vorgegebenen Wert (W_{max/min});
d) Auslösen eines Signals, sobald der gemessene Wert (W) den gespeicherten vorgegebenen Wert (W_{max/min}) über- oder untersteigt, **dadurch gekennzeichnet, dass**
die Prozessgröße (W) der Feuchtigkeitsgehalt im Schmierstoff des Lagers (2, 3, 4, 5) ist.

2. Verfahren nach Anspruch 1, **dadurch gekennzeichnet, dass** der gemessene Wert (W) drahtlos übertragen wird.

3. Verfahren nach Anspruch 2, **dadurch gekennzeichnet, dass** die drahtlose Übertragung durch Induktion erfolgt.

4. Verfahren nach Anspruch 2, **dadurch gekennzeichnet, dass** die drahtlose Übertragung durch Funk erfolgt.

5. Vorrichtung zum Überwachen einer Lageranordnung (1) mit mindestens einem Lager (2, 3, 4, 5) in einem Einbaustück (6) einer Walzenzapfenlagerung einer Stütz- (8), Zwischen- (9) oder Arbeitswalze (10) in einem Duo-, Quarto- oder Sextogerüst (11) einer ein- oder mehrgerüstigen Walzstraße, insbesondere zur Durchführung des Verfahrens nach einem der Ansprüche 1 bis 4,
wobei die Vorrichtung folgende Merkmale aufweist
- einen oder mehrere Sensoren (14), der bzw. die eine Prozessgröße (W) am Lager (2, 3, 4, 5) oder in einem dem Lager (2, 3, 4, 5) benachbarten Bereich aufnehmen;
- Mittel (15) zum Zuleiten des gemessenen Wertes der Prozessgröße (W) an eine Auswerteeinrichtung (13);
- Mittel (16) zum Vergleichen des gemessenen Wertes (W) mit einem gespeicherten vorgegebenen Wert (W_{max/min});
- Mittel (17) zum Auslösen eines Signals, sobald der gemessene Wert (W) den gespeicherten vorgegebenen Wert (W_{max/min}) über- oder untersteigt,
**dadurch gekennzeichnet, dass** der Sensor (14) ein Feuchtigkeitssensor ist.

6. Vorrichtung nach Anspruch 5, **dadurch gekennzeichnet, dass** das Lager (2, 3, 4, 5) ein Wälzlager ist.

7. Vorrichtung nach Anspruch 6, **dadurch gekennzeichnet, dass** das Lager (2, 3, 4, 5) ein mehrreihiges Kegelrollenlager ist.

8. Vorrichtung nach Anspruch 6, **dadurch gekennzeichnet, dass** das Lager (2, 3, 4, 5) ein mehrreihiges Zylinderrollenlager ist.

9. Vorrichtung nach einem der Ansprüche 5 bis 8, **dadurch gekennzeichnet, dass** die Mittel (15) zum Zuleiten des gemessenen Wertes der Prozessgröße (W) an die Auswerteeinrichtung (13) den Wert drahtlos, vorzugsweise durch Induktion oder durch Funk, übertragen.

## Claims

1. A method of monitoring a bearing assembly (1) with at least one bearing (2,3,4,5) in a mounting member (6) of a roll journal bearing of a back-up roll (8), intermediate roll (9) or working roll (10) in a two, four or six-high stand (11) of a single or multi-stand roll train, wherein
the method has the following steps:
a) measuring a process variable (W) at the bearing (2,3,4,5) or in an area adjacent the bearing (2,3,4,5);
b) feeding the measured value of the process variable (W) to an evaluating device (13);
c) comparing the measured value with a stored predetermined value (W_{max/min});
d) triggering a signal as soon as the measured value (W) exceeds or falls below the stored predetermined value (W_{max/min}),
**characterised in that** the process variable (W) is the moisture content in the lubricant of the bearing (2,3,4,5).

2. A method according to Claim 1, **characterised in that** the measured value (W) is transmitted wirelessly.

3. A method according to Claim 2, **characterised in that** the wireless transmission is carried out by induction.

4. A method according to Claim 2, **characterised in that** the wireless transmission is carried out by radio.

5. An apparatus for monitoring a bearing assembly (1) with at least one bearing (2,3,4,5) in a mounting member (6) of a roll journal bearing of a back-up roll (8), intermediate roll (9) or working roll (10) in a two, four or six-high stand of a single or multi-stand roll train, in particular for carrying out the method according to any one of Claims 1 to 4,
wherein the apparatus has the following features:
- one or more sensors (14) which pick(s) up a process variable (W) at the bearing (2,3,4,5) or in an area adjacent the bearing (2,3,4,5);
- means (15) for feeding the measured value of the process variable (W) to an evaluating device (13);
- means (16) for comparing the measured value (W) with a stored predetermined value (W_{max/min});
- means (17) for triggering a signal as soon as the measured value (W) exceeds or falls below the stored predetermined value (W_{max/min}),
**characterised in that** the sensor (14) is a moisture sensor.

6. An apparatus according to Claim 5, **characterised in that** the bearing (2,3,4,5) is a plain bearing.

7. An apparatus according to Claim 6, **characterised in that** the bearing (2,3,4,5) is a multirow tapered roller bearing.

8. A method according to Claim 6, **characterised in that** the bearing (2,3,4,5) is a multirow cylindrical roller bearing.

9. An apparatus according to any one of Claims 5 to 8, **characterised in that** the means (15) for feeding the measured value of the process variable (W) to the evaluating device (13) transmit the value wirelessly, preferably by induction or by radio.

## Revendications

1. Procédé pour surveiller un agencement de palier (1) comprenant au moins un palier (2, 3, 4, 5) dans une empoise (6) d'un support de tourillon de cylindre d'un cylindre d'appui (8), d'un cylindre intermédiaire (9) ou d'un cylindre de travail (10), dans une cage (11) à deux, quatre ou six cylindres d'un train de laminoir à une ou plusieurs cages, ledit procédé comprenant les étapes suivantes :
a) mesure d'une grandeur de processus (W) sur le palier (2, 3, 4, 5) ou dans une zone contiguë au palier (2, 3, 4, 5);
b) transmission de la valeur mesurée de la grandeur de processus (W) à un dispositif de traitement (13);
c) comparaison de la valeur mesurée avec une valeur (W_{max/min}) prédéterminée mémorisée;
d) déclenchement d'un signal dès que la valeur mesurée (W) devient supérieure ou inférieure à la valeur (W_{max/min}) prédéterminée mémorisée,
**caractérisé par le fait que** la grandeur de processus (W) est la teneur en humidité du lubrifiant du palier (2, 3, 4, 5).

2. Procédé selon la revendication 1, **caractérisé par le fait que** la valeur (W) mesurée est transmise par une liaison sans fil.

3. Procédé selon la revendication 2, **caractérisé par le fait que** la transmission sans fil est réalisée par induction.

4. Procédé selon la revendication 2, **caractérisé par le fait que** la transmission sans fil est réalisée par voie hertzienne.

5. Dispositif pour surveiller un agencement de palier (1) comprenant au moins un palier (2, 3, 4, 5) dans une empoise (6) d'un support de tourillon de cylindre d'un cylindre d'appui (8), d'un cylindre intermédiaire (9) ou d'un cylindre de travail (10), dans une cage (11) à deux, quatre ou six cylindres d'un train de laminoir à une ou plusieurs cages, en particulier pour la mise en oeuvre du procédé selon une des revendications 1 à 4, ledit dispositif présentant les caractéristiques suivantes :
- un ou plusieurs capteur(s) (14) qui recueille(nt) une grandeur de processus (W) sur le palier (2, 3, 4, 5) ou dans une zone contiguë au palier (2, 3, 4, 5);
- des moyens (15) pour transmettre la valeur mesurée de la grandeur de processus (W) à un dispositif de traitement (13);
- des moyens (16) pour comparer la valeur mesurée avec une valeur (W_{max/min}) prédéterminée mémorisée;
- des moyens (17) pour déclencher un signal dès que la valeur mesurée (W) devient supérieure ou inférieure à la valeur (W_{max/.min}) prédéterminée mémorisée,
**caractérisé par le fait que** le capteur (14) est un capteur d'humidité.

6. Dispositif selon la revendication 5, **caractérisé par le fait que** le palier (2, 3, 4, 5) est un palier à roulement.

7. Dispositif selon la revendication 6, **caractérisé par le fait que** le palier (2, 3, 4, 5) est un palier à rouleaux coniques à plusieurs rangées.

8. Dispositif selon la revendication 6, **caractérisé par le fait que** le palier (2, 3, 4, 5) est un palier à rouleaux cylindriques à plusieurs rangées.

9. Dispositif selon une des revendications 5 à 8, **caractérisé par le fait que** les moyens (15) servant à transmettre la valeur mesurée de la grandeur de processus (W) au dispositif de traitement (13) transmettent cette valeur par une liaison sans fil, de préférence par induction ou par voie hertzienne.
